Europäisches Patentamt

European Patent Office

Office européen des brevets

(11) Publication number: **0 495 276 A1**

# EUROPEAN PATENT APPLICATION

(21) Application number: **91300395.0**

(51) Int. Cl.5: **B29C 67/14**

(22) Date of filing: **18.01.91**

(43) Date of publication of application:
**22.07.92 Bulletin 92/30**

(84) Designated Contracting States:
**BE DE DK ES FR GB IT SE**

(71) Applicant: **Tsai, Ko-Jan Carlos**
**No. 30, Sec. 2, Ya Tan Road, Tan Tzu Hsiang**
**Taichung Hsien(TW)**

(72) Inventor: **Tsai, Ko-Jan Carlos**
**No. 30, Sec. 2, Ya Tan Road, Tan Tzu Hsiang**
**Taichung Hsien(TW)**

(74) Representative: **Dunlop, Brian Kenneth**
**Charles et al**
**c/o Wynne-Jones, Lainé & James 22 Rodney**
**Road**
**Cheltenham Gloucestershire GL50 1JJ(GB)**

(54) **A method for manufacturing a composite structure.**

(57) A method of producing a composite structure includes preparing a mold cavity, wrapping a number of layers of composite fibers so as to form a shell shaped in the form of the composite structure, inserting solvent material into the shell, arranging the shell within the mold cavity, heating the solvent material to cause expansion and to generate pressure within the mold cavity so as to press against the layers of composite fibers and thereby provide intimate bonding of the layers, and remove the shell as an integral composite structure.

FIG. 2

The invention relates to a method for manufacturing a composite structure.

Composite materials, especially composite fibers, such as carbon fibers, glass fibers, boron fibers etc., or prepreg materials are widely used for making racket frames, bicycle frames etc.

U.S. Patent No. 4,129,634 to Cecka et al. discloses a method for producing a racket frame which has a strip shaped foamable plastic core disposed therein. The foamable material is caused to expand and to generate pressure within mold cavity and thereby provide intimate bonding of the core to the shell. It is very important that a steady and firm pressure is required to be applied to the frame during the curing stage. The racket frame which is made by the above-mentioned method with a core disposed therein has a weight heavier than the hollow racket frames.

U.S. Patent No. 4,828,781 discloses a method of molding composite bicycle frames. In this patent, air inflatable bladders are employed to compress the layers of the composite materials, and a compressor is connected to the bladders for supplying pressurized air. The facilities and the maintenance thereof increase the manufacturing costs. Furthermore, the manufacturing processes are complicate.

The objective of the invention is to provide a method for manufacturing a composite structure which has an evaporable solvent disposed therein in order to generate a pressure within the composite structure so that the composite structure can be formed uniformly and homogeneously.

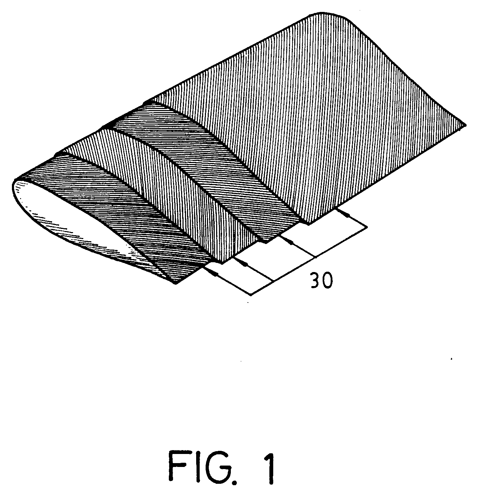

FIG. 1 is an enlarged view of a portion of the unidirectionally oriented resin-impregnated graphite fiber structure, with successive layers serially exposed; and

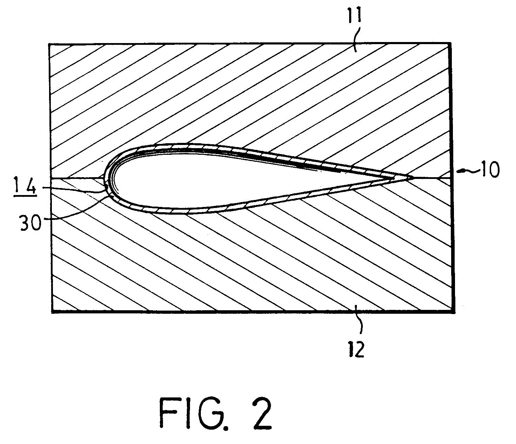

FIG. 2 is a cross sectional view of a mold.

Referring to the drawings, the composite structure is formed from a closed shell which comprises a plurality of layers 30, each made of a sheet of a so-called prepreg material or composite material, or a unidirectionally oriented and resin-impregnated composite material, such as graphite fiber, boron fiber or glass fiber etc., in which most of the composite structures are made of graphite fibers. It is preferable that every two adjacent layers 30 are arranged at predetermined or suitable angles to each other. The graphite fibers used to make the graphite fiber sheets comprises yarns containing hundreds, or thousands, of individual filaments, as is known in the art.

The composite structure is made in a molding process within a rigid mold 10 capable of withstanding the internal forces caused by the pressure developed in the curing cycle. The composite structure is wrapped to a closed type shell which is disposed in a mold cavity 14 formed between the upper mold 11 and the lower mold 12 of the rigid mold 10. A solvent material, such as methylene chloride or toluene etc., which is evaporable is provided or injected into the shell before the shell is closed. The solvent material which is in liquid state is freely disposed in the shell.

The solvent material is caused to evaporate or to expand from liquid state to gaseous state by the heat during the curing process. As the solvent agent expands, it generates pressure within the confined mold cavity in order to bond together the graphite fiber layers into a unitary shell. The pressure which is generated by the vaporized solvent material is even and homogeneous. Upon completion of the curing cycle, the mold is cooled and then opened; and the molded frame is removed. A composite structure of excellent structural integrity is thus obtained. The composite structure has a hollow interior.

It is very important to determine the required mass and/or the volume of the solvent material before it is injected into the shell. The required mass of the solvent material is determined by the gas equation as follows:

$$P\,V = n\,R\,T = (m/M)\,R\,T, \text{ in which}$$

P is the pressure in each shell, (atm),
V is the volume in each shell, (1),
n is the molecular number (moles), (n = m/M)
m is the mass of the solvent material (gm),
M is the molecular weight of the solvent material (gm/mole),
R is the universal gas constant (0.082 atm-1/mole K), and
T is the absolute temperature (degree K),
(T = 273 + the heating temperature during curing process, degree C).

The inside volume of the composite structure V, the universal gas constant R and the molecular weight M of the solvent material to be used can be selected and predetermined. Therefore, when a required heating temperature T and pressure P for a curing process are selected, i.e., when the temperature and the pressure P are determined, the mass of the solvent material can be precisely calculated by this equation.

The following is an example for calculating the required mass of the solvent material:

the volume in a shell V = 7 1, a selected curing temperature 150 C (T = 273 + 150 K), a selected pressure in the shell P = 10 atm, gas constant R = 0.082 atm-1/mole K, and the molecular weight of a ethylene chloride M = 97.0 gm/mole; therefore, according to the above-mentioned equation: m = PVM/RT = (10*7*97.0)/(0.082*423) = 196.0 gm. Accordingly, the required mass of the solvent material can be precisely calculated.

Accordingly, a composite structure of excellent structural integrity is formed without foamable materials and without compressor which is required in a conventional method to generate a pressurized air in order to produce the composite structures. In addition, there is only about 196 grams of solvent material is required for manufacturing a composite structure, such as a wing of an air plane. There is only about 2 to 10 grams of solvent material is required for manufacturing a racket frame or a bicycle frame.

**Claims**

1. A method for manufacturing a composite structure comprising preparing a mold cavity shaped in the form of said composite structure, wrapping a plurality of layers of unidirectionally oriented resin-impregnated composite fibers so as to form a shell shaped in the form of said composite structure, inserting solvent material into said shell, arranging said wrapped shell within said mold cavity, heating said solvent material to cause expansion thereof and to generate pressure within said mold cavity so as to press against said layers of composite fibers and thereby provide intimate bonding of said layers, and thereafter removing said shell as an integral composite structure.

30

# FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 408 161 (MECRON MEDIZINISCHE PRODUKTE)<br>* claim 1 *<br>--- | 1 | B29C67/14 |
| A | EP-A-0 223 252 (NIPPON PETROCHEMICALS)<br>* page 15, line 11 - line 16 *<br>* page 11, line 13 - line 23 *<br>--- | 1 | |
| A | PATENT ABSTRACTS OF JAPAN<br>vol. 13, no. 170 (M-817)21 April 1989<br>& JP-A-01 004 313 ( NKK CORP ) 9 January  1989<br>* abstract *<br>--- | 1 | |
| A | PATENT ABSTRACTS OF JAPAN<br>vol. 9, no. 164 (M-395)10 July 1985<br>& JP-A-60 040 232 ( MITSUBISHI JUKOGYO ) 2 March 1985<br>* abstract *<br>----- | 1 | |
| | | | TECHNICAL FIELDS SEARCHED (Int. Cl.5 ) |
| | | | B29C |

The present search report has been drawn up for all claims

| Place of search | Date of completion of the search | Examiner |
|---|---|---|
| THE HAGUE | 10 FEBRUARY 1992 | VAN WALLENE A.M. |